# EUROPEAN PATENT SPECIFICATION

(11) **EP 3 376 383 B1**
(45) Date of publication and mention of the grant of the patent: **10.05.2023**
(21) Application number: 17160695.7
(22) Date of filing: 13.03.2017
(51) Int. Cl.: G06F 9/50, G06F 9/44, G06F 3/06, G06F 8/72

(54) **DEVICE AND METHOD FOR OPTIMISING SOFTWARE IMAGE LAYERS OF PLURAL SOFTWARE IMAGE LAYER STACKS**
VORRICHTUNG UND VERFAHREN ZUR OPTIMIERUNG VON SOFTWARE-BILDSCHICHTEN MEHRERER SOFTWAREBILDSCHICHTSTAPELN
DISPOSITIF ET PROCÉDÉ D'OPTIMISATION DE COUCHES D'IMAGE LOGICIELLE DE PLUSIEURS EMPILEMENTS DE COUCHES D'IMAGE LOGICIELLE

(43) Date of publication of application: 19.09.2018
(73) Proprietor: Nokia Solutions and Networks Oy, 02610 Espoo (FI)
(72) Inventor: Vandeputte, Frederik, 2018 Antwerpen (BE)
(74) Representative: IP HILLS NV

(56) References cited:
- US-A1- 2012 167 087
- US-A1- 2014 229 440
- US-A1- 2015 095 597
- US-A1- 2016 283 506

## Description

### Technical Field

The present invention generally relates to optimising software image layers of plural software image layer stacks that are stored in a common software image repository. More particularly, the invention concerns optimising software image layers to reduce the overall footprint of storing software image layer stacks in a software image repository, and fetching software image layer stacks from the software image repository by computing nodes whereon the software image layer stacks have to be installed and run.

### Background

A software image layer stack, also named a service image layer stack or a software stack, is a specific type of software image that comprises a plurality of software image layers logically stacked on top of each other. A software image layer, also named a service image layer or image layer, comprises a subset of software items, like for instance application, utility or operating system binaries, dynamic or static libraries, configuration files, and other artefacts such as binary files, pictures, etc. The software items can be either individual software files or subsets of software files. This way, application services can be wrapped and deployed as software stacks that are pushed into a software image repository or registry from where they are fetched to be provisioned on computing nodes, e.g. edge cloud nodes located in one or plural data centres.

One specific popular existing implementation of such software architecture based on software stacks is the Docker platform. Therein, each service is built as a Docker container image, i.e. a software stack, consisting of multiple image layers stacked on top of each other. The container images are pushed onto a public or private Docker repository and again pulled from this repository when an instance of the service needs to be provisioned, i.e. downloaded, installed and run, on a particular computing node.

An advantage of the layered software architecture is that different software stacks can have similar bottom layers and different top layers. Software stacks representing different applications or services consequently do not have to be built from scratch but can reuse existing layers. As a result, different containers or software stacks shall contain similar or even identical image layers. In particular the base layers will typically be shared across a large number of software stacks. However, as software stacks like Docker containers are often generated independently from each other, i.e. by different tenants and/or at different times, there is overlap between the software image layers.

The overlap between software image layers of different software stacks is sometimes reduced manually. For a large number of application services and consequently a large number of software stacks, manual optimisation of the software image layers however is difficult to manage. In particular when the application services are generated and managed by different independent entities, manually reducing the overlap between software image layers becomes impossible.

Techniques already exist to automatically repackage software image layers into a new set of optimized software image layers, possibly even reducing the set of software image layers to a single optimized image layer. However, these existing techniques focus on optimising software image layers within a single software stack or service container. Certain tools rely on a combination of static and dynamic application profiling to determine which files are used and which are not. Files that are not used are then removed from the software stack in order to create an optimized software stack. Other tools merge some of the software image layers of a software stack into a single software layer to reduce the overhead. This may for instance be done when files that are created in a software image layer are removed at a higher layer. Some of the software image layers indeed can logically remove files from lower software image layers in the software stack.

United States Patent Application US 2015/0095597 A1, entitled "High Performance Intelligent Virtual Desktop Infrastructure Using Volatile Memory Arrays", describes a solution for efficient storage of Virtual Machine (VM) images in RAM. A VM image corresponds to the data set needed to replicate a VM for a single user. The gain in efficiency is achieved by deduplicating the VM image data across the VM images for multiple users. Thereto, repeated data chunks, i.e. identical byte patterns, are identified and replaced with a pointer.

United States Patent Application US 2012/0167087 A1, entitled "Apparatus and Method for Driving Virtual Machine, and Method for Deduplication of Virtual Machine Image", also deals with deduplication of VM images. A VM image is divided in chunks and deduplication is organised at chunk level.

United States Patent Application US 2014/0229440 A1, entitled "Method and Apparatus for Replicating Virtual Machine Images Using Deduplication Metadata", also describes a VM manager with deduplication of data. Therein, duplicate data is replaced with deduplication metadata, for instance a block no. or hash value.

United States Patent Application US 2016/0283506 A1, entitled "On-The-Fly Deduplication During Data Movement for NOSQL Data Stores", deals with deduplication of data before a storage backup is made. Therein, the deduplication is not done at file level but at file item level. Some form of repackaging takes place in US 2016/0283506 A1: a deduplicated item like for instance a table used in several documents, is repackaged together with all locations where it is used.

### Summary

Cross software stack optimization of software image layers is currently not being exploited in an automated manner. As a result, many different software image layers that form part of different services, i.e. different software stacks, only differ slightly from each other or share a significant amount of files but still have to be fetched and installed separately. Disadvantages thereof are a high footprint for storing such software stacks in a common repository and provisioning such software stacks from a common repository to computing nodes. Indeed, the overlap between software image layers of plural software stacks stored in a common repository results in increased disk occupancy on each physical or virtual host, higher bandwidth requirements to fetch all software image layers from the repository by a computing node, larger installation times of services and consequently delayed availability of such services.

It is therefore an objective to disclose a device for optimising software image layers of plural software stacks stored in a common software image repository that automatically minimizes the overlap between software image layers hence reducing the footprint for storing and provisioning such software stacks.

Embodiments of the invention disclose a device for optimising software image layers of plural software image layer stacks stored in a common software image repository as defined by claim 1, each software image layer stack comprising a plurality of software image layers wherein a software image layer can individually be pushed into and pulled from the common software image repository and can be reused across several of the software image layer stacks, and each software image layer comprising one or more software items, wherein a software item is either an individual software file or a subset of software files, the device comprising:
- a content analysing module configured to analyse the content of the software image layers and identify overlap in software items between the software image layers;
- a layer optimization module configured to repackage the software items of the software image layers into optimized software image layers wherein the optimized software image layers associated with the software image layer stacks comprise a number of optimized software image layers that have the exact same constitution of software items; and
- a storage management module adapted to store said optimized software image layers only once in an image layer store of said common software image repository.

Thus, a content analysing module analyses the content of each of the software image layers, either each layer individually or any combined subset of layers, identifies the constitution of each software image layer in terms of items it contains, and identifies the overlap between software image layers of multiple software stacks, i.e. the presence of identical items in software image layers that form part of plural software stacks. This knowledge is then exploited by a layer optimization module that repackages the items into optimized software image layers. The layer optimization module strives at creating or even maximizing the number of identical optimized software image layers, i.e. software image layers that have the exact same constitution of items. Identical optimized software image layers can be stored only once in the common repository. By generating identical optimized software image layers across multiple software stacks, and storing these identical software image layers only once, the storage footprint on the repository is reduced or even minimized. The overall objective when creating optimized software image layers resides in reducing or minimizing the overall overhead. This overall overhead has various, sometimes conflicting, contributing factors, such as the storage space occupied by the software image layers in the common repository, the installation time and runtime overhead on computing nodes that download and run the software stacks. The optimization module consequently has to determine how many unique software image layers there should be, trading off compactness obtained by removing redundancies against the overhead caused by an increased number of (possibly tiny) unique software image layers. Possible heuristics considered by the optimization module could be to limit the maximum number of optimized software image layers per software stack, setting a threshold on the minimum size of each optimized software image layer, explicitly quantifying the overhead and/or benefit of creating an additional unique software image layer and setting a threshold therefore, or any combination of the above heuristics. When increasing the number of identical optimized software image layers, the number of shared software image layers between services is increased, and consequently the number of unique software image layers across a selected set of services to be provisioned from the common repository may be reduced. When this set of selected services is to be provisioned from the common repository onto one or plural computing nodes, the bandwidth occupancy in the network will be smaller, fetching and installation of the services onto the computing nodes will be faster resulting in shorter provisioning times, and the disk occupancy in the computing nodes, e.g. edge cloud servers in a data centre in an on-demand driven distributed edge cloud environment, will be smaller further reducing the costs for data centre operators.

A storage management module that is integrated in the device for optimising software image layers according to the present invention, is configured to store the identical optimized software image layers only once in an image layer store of the repository. This way, the reduction in storage footprint for storing all software image layers of all services is maximized.

Embodiments of the device for optimising software image layers according to the invention, as defined by claim 2, further comprise:
- a usage pattern module configured to detect patterns in the push or pull commands of particular service providers or computing nodes indicative for combined usage of software image layers.

Indeed, in advantageous embodiments of the device according to the invention, patterns of push and pull commands of particular service providers, computing nodes and/or previous builds of the same software stack are automatically learned and patterns are detected on how often and in what combinations software image layers are typically being used. The so obtained information on usage patterns of software image layers could be exploited to determine if it is worth optimizing the software image layers. If for instance a particular software image layer is newer or only a few times being pulled, then the optimisation of such software image layer in line with the present invention causes additional runtime overhead with little actual benefit. The usage patterns of software image layers in other words in advantageous embodiments of the present invention are exploited to determine which software image layers in the various software stacks will be subject to optimization in line with the present invention.

Embodiments of the device for optimising software image layers according to the invention, as defined by claim 3, further comprise:
- a tagging module adapted to tag the optimized software image layers as being unchanged.

Thus, one optimization could lie in the tagging of optimized software image layers as being unchanged such that they do not have to be fetched from the repository again when new software stacks are pushed onto the common repository. Indeed, when a new software stack is pushed onto the common repository, the repackaging optimization may in general impact the newly pushed software stack but may also impact a subset of the already existing software image layers in the repository. To avoid that existing software image layers have to be re-optimized, requiring to pull the existing software layer images from the repository and requiring additional optimization overhead, the existing optimized software image layers may be tagged, as a consequence of which only the software image layers of the newly pushed software stack will be optimized towards the already optimized software image layers in the repository.

It is noticed that in situations where additional overhead is less an issue, also the existing optimized software image layers may be reconsidered and re-optimized when a new software stack is pushed into the repository. This will allow to exploit better global optimization opportunities.

In embodiments of the device for optimising software image layers according to the invention, as defined by claim 4, the content analysing module and the layer optimization module are controlled to analyse the content of the software image layers and to repackage the software items of the software image layers into the optimized software image layers when a software image layer stack is pushed into the common software image repository.

Indeed, one can envision different optimization strategies as to when and where the software image layer repackaging is done. One possibility is to do the software image repackaging at the push stage, i.e. when software stacks are being uploaded and stored in the repository. Doing the software image layer optimization at the push stage has the advantage that no optimizations need to be done when a service is being pulled which would result in additional delay when provisioning a service on a computing node. This approach however has the drawback that many software image layer optimizations may be done blindly, i.e. generating overhead without actual benefit. Doing the optimizations at the push stage therefore advantageously may be combined with usage pattern detection as described here above.

In alternative embodiments of the device for optimising software image layers according to the invention, as defined by claim 5, the content analysing module and the layer optimization module are controlled to analyse the content of the software image layers and to repackage the software items of the software image layers into the optimized software image layers when a software image layer stack is pulled from the common software image repository.

Indeed, as an alternative for the above scenario where software image layers are optimized at the push stage, the optimizations may be done at the pull stage, i.e. just before a software stack is being fetched or downloaded from the repository by a computing node. Doing the optimizations in a more lazy manner at the pull stage enables to better understand and correlate the subset of services being pulled from a single repository, even cross-service provider. This enables location-specific optimizations of software image layers, in particular in situations where the subset of services to be pulled from the repository is announced upfront or learned upfront from previous deployments of service combinations. A drawback of doing the optimizations at the pull stage is that the storage footprint reduction in the common repository is not maximized.

In further alternative embodiments, the repackaging of software image layers may be executed at both the push stage and pull stage.

In embodiments of the device for optimising software image layers according to the invention, as defined by claim 6, the device is integrated in a central software repository.

Indeed, the optimized repackaging of software image layers may be integrated in a global repository wherein the software stacks of multiple independent entities are centralized for being distributed to computing nodes of service providers located in various data centres, with the advantages described above.

In alternative embodiments of the device for optimising software image layers according to the invention, as defined by claim 7, the device is distributed across plural local and/or a central software repositories.

The optimized repackaging of software image layers hence also may be implemented in a distributed, possible hierarchical manner when local repositories are added to a global repository. The local repositories could either be explicitly visible or could also be transparent cache nodes, such as for instance Content Delivery Network nodes or CDN nodes. The advantage of a distributed implementation of the present invention is that it enables to do various optimizations locally such that the central, global repository does not have to do all optimizations. It also enables to significantly reduce the amount of unique software image layers that need to be pushed over the network towards the global repository.

It is noticed that a specific optimization strategy could be applied in the local repositories such that only small optimizations are required at the global repository. One strategy could for instance be that the local repositories create many atomic small software image layers that later on easily could be aggregated in the global repository, either during push stage or pull stage.

It is further noticed that in the various data centres, edge cloud nodes or computing environments, a local repository could be installed with software image layer optimization to minimize the download bandwidth and download times for fetching the unique software image layers locally and re-optimizing and redistributing them locally across the various computing nodes.

Embodiments of the present invention also concern a computer-implemented method for optimising software image layers of plural software image layer stacks stored in a common software image repository, as defined by claim 8, each software image layer stack comprising a plurality of software image layers wherein a software image layer can individually be pushed into and pulled from the common software image repository and can be reused across several of the software image layer stacks, and each software image layer comprising one or more software items, wherein a software item is either an individual software file or a subset of software files, the method comprising:
- analysing the content of the software image layers and identifying overlap in software items between the software image layers;
- repackaging the software items of the software image layers into optimized software image layers wherein the optimized software image layers associated with the software image layer stacks comprise a number of optimized software image layers that have the exact same constitution of software items; and
   and
- storing the optimized software image layers only once in an image layer store of the common software image repository.

Embodiments of the present invention further concern a computer program product as defined by claim 9 comprising computer-executable instructions for performing the method according to the invention when the program is run on a computer.

Embodiments of the invention further also concern a computer readable storage medium as defined by claim 10, comprising the computer program product according to the invention.

### Brief Description of the Drawings

Fig. 1 illustrates an embodiment 101 of the device for optimising software image layers according to the present invention;
Fig. 2A and 2B illustrate the gain in storage footprint obtained by the embodiment 101 of the device for optimising software image layers according to the present invention of Fig. 1;
Fig. 3 illustrates integration of an embodiment 352 of the device according to the present invention in a central software repository 350;
Fig. 4 illustrates distributed integration of embodiments 442, 452, 462, 472, 482 of the device according to the present invention in local and central software repositories; and
Fig. 5 illustrates a suitable computing system 500 for realizing methods and devices according to embodiments of the invention.

### Detailed Description of Embodiment(s)

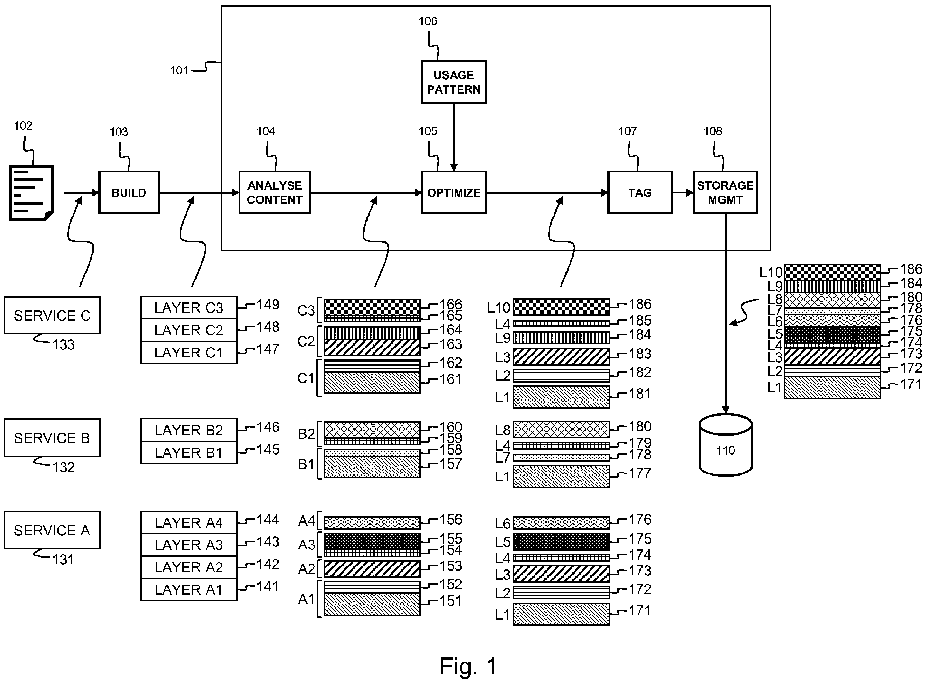

In Fig. 1 it is assumed that one or several entities have generated scripts 102, the scripts corresponding to respective services A, B and C, denoted 131, 132 and 133 in Fig. 1. A software stack builder 103 has generated software image layer stacks for each of the services A, B and C, independently from each other and typically at different times. This has resulted in a first software stack consisting of four software image layers for service A, more precisely layers A1, A2, A3 and A4, respectively denoted 141, 142, 143 and 144 in Fig. 1. This further has resulted in a second software stack consisting of two software image layers for service B, more precisely layers B1 and B2, respectively denoted 145 and 146 in Fig. 1. In addition, this has resulted in a third software stack consisting of three software image layers for service C, more precisely layers C1, C2 and C3, respectively denoted 147, 148 and 149 in Fig. 1.

Fig. 1 further shows a device 101 for optimising software image layers that comprises a content analysing module 104, a layer optimization module 105, a usage pattern detection module 106, a tagging module 107 and a storage management module 108.

The content analysing module 104 analyses the content of the software image layers 141-149 of the respective services 131-133. The content analysing module 104 thereto identifies which software items form part of each of these software image layers 141-149. The content analysing module 104 further identifies overlap in items between the different software image layers 141-149 by recognizing identical items present in different software image layers across the different software stacks, and by distinguishing unique items that are only present in a single software image layer of a single software stack. In the example of Fig. 1, the content analysing module 104 identifies the software items 151 and 152 in software image layer A1, identifies the software item 153 in software image layer A2, identifies the software items 154 and 155 in software image layer A3, identifies the software item 156 in software image layer A4, identifies the software items 157 and 158 in software image layer B1, identifies the software items 159 and 160 in software image layer B2, identifies the software items 161 and 162 in software image layer C1, identifies the software items 163 and 164 in software image layer C2, and identifies the software items 165 and 166 in software image layer C3. The content analysing module 104 further establishes that the items 151, 157 and 161 in respective software image layers A1, B1 and C1 are identical. The items 151, 157 and 161 therefore are marked with an identical pattern in Fig. 1. The content analysing module 104 also detects that the items 152 and 162 in respective software image layers A1 and C1 are identical. Also these items 152 and 161 are marked with an identical pattern in Fig. 1. The content analysing module 104 further notices that the items 153 and 163 in respective software image layers A2 and C2 are identical. The items 153 and 163 consequently are also marked with an identical pattern in Fig. 1. The content analysing module 104 at last establishes that the items 154, 159 and 165 in respective software image layers A3, B2 and C3 are identical. The items 154, 159 and 165 therefore are also marked with an identical pattern in Fig. 1. The remaining items 155, 156, 158, 160, 164 and 166 are unique items and as a result of that are marked with respective unique patterns in Fig. 1.

It is noticed that the software items 151-186 each represent a subset of software files that also appear in other software image stacks. Typically, such subset of software files shall comprise more than one single software file. It could comprise for instance an entire folder, all software files related to one or more applications, etc.

The knowledge obtained through analysis of the content of the software image layers 141-149 in terms of items and overlap in items is reported to the layer optimization module 105 whose task it is to repackage the software items 151-166 into optimized software image layers L1-L10. The layer optimization module 105 may further receive information on the usage pattern of software image layers or software stacks from a usage pattern module 106 that detects patterns of combined usage of the software image layers or stacks, e.g. patterns detected in the push or pull commands of particular service providers or computing nodes. The grouping of the software items into optimized software image layers is done such that identical optimized software layers are generated. In the example of Fig. 1, this comes down to the creation of an optimized software image layer for each item, but in general this will not be the case as the creation of an additional optimized software layer and the benefit thereof to remove redundancies must be trade-off against the overhead increase that such additional optimized software layer may bring. Item 151 extracted from software image layer A1 becomes item 171 packaged into optimized software image layer L1, item 152 extracted from software image layer A1 becomes item 172 packaged into optimized software image layer L2, item 153 extracted from software image layer A2 becomes item 173 packaged into optimized software image layer L3, item 154 extracted from software image layer A3 becomes item 174 packaged into optimized software image layer L4, item 155 extracted from software image layer A3 becomes item 175 packaged into optimized software image layer L5, item 156 extracted from software image layer A4 becomes item 176 packaged into optimized software image layer L6, item 157 extracted from software image layer B1 becomes item 177, identical to item 171 and consequently packaged into an optimized software image layer identical to L1, item 158 extracted from software image layer B1 becomes item 178 packaged into optimized software image layer L7, item 159 extracted from software image layer B2 becomes item 179, identical to item 174 and consequently packaged into an optimized software image layer identical to L4, item 160 extracted from software image layer B2 becomes item 180 packaged into optimized software image layer L8, item 161 extracted from software image layer C1 becomes item 181, identical to item 171 and consequently packaged into an optimized software image layer identical to L1, item 162 extracted from software image layer C1 becomes item 182, identical to item 172 and consequently packaged into an optimized software image layer identical to L2, item 163 extracted from software image layer C2 becomes item 183, identical to item 173 and consequently packaged into an optimized software image layer identical to L3, item 164 extracted from software image layer C2 becomes item 184 packaged into optimized software image layer L9, item 165 extracted from software image layer C3 becomes item 185, identical to item 174 and consequently packaged into an optimized software image layer identical to L4, and item 166 extracted from software image layer C3 becomes item 186 packaged into optimized software image layer L10. As a result of the repackaging into optimized software image layers L1-L10, three identical optimized software image layers L1, two identical optimized software image layers L2, two identical optimized software image layers L3, and three identical optimized software image layers L4 have been created. Starting from the original software image layers 141-149, the above described optimization step enables to remove 6 redundant optimized software image layers before storage in the common software image repository 110. In general, the optimization module 105 will have to determine how many unique software layers there should be, trading off compactness gained through removal of redundant software image layers on the one hand, against the increase in overhead caused by too many possibly tiny unique layers on the other hand. Possible heuristics that the optimization module 105 could implement is to limit the maximum number of optimized software image layers per software stack, to put a threshold on the minimal size of each optimized software image layer, to explicitly quantify the overhead and/or benefit of creating an additional unique software layer and to set a limit for such overhead or minimal threshold for such benefit, or any combination of the above heuristics could be implemented.

The storage management module 108, responsible for storing the software image layers needed to provision services A, B and C on computing nodes from the common software image repository 110, stores identical optimized software image layers only once in the repository 110. Thus, layer L1 wherein software item 171 is packaged, layer L2 wherein software item 172 is packaged, layer L3 wherein software item 173 is packaged, layer L4 wherein software item 174 is packaged, layer L5 wherein software item 175 is packaged, layer L6 wherein software item 176 is packaged, layer L7 wherein software item 178 is packaged, layer L8 wherein software item 180 is packaged, layer L9 wherein software item 184 is packaged, and layer L10 wherein software item 186 is packaged, under control of the storage management module 108, become stored in the common software image repository, possibly supplemented with metadata indicative for the respective constitution of the services A, B and C out of the optimized software image layers L1-L10. A tagging module 107 positioned before or after the storage management module 108 may tag software image layers as being unchanged such that they do not have to be fetched from the repository 110 again for re-optimization when new software stacks are pushed onto the repository 110. The tagging module 107 thus avoids that existing software image layers stored in the repository 110 are pulled from the repository for re-optimization each time new software image layers arrive for optimization and storage in the repository 110. The tagging module 107 however is optional and may be absent in variant embodiments of the optimization device 101 according to the invention.

It is noticed that although in the example of Fig. 1 each optimized software image layer consists of a single software item, e.g. a single software file, this will not necessarily be the case in alternative scenario's. The skilled person will appreciate that the overlap in items between software image layers may in alternative scenarios be such that identical optimized software image layers can be generated that contain plural software items, each possibly comprising subsets of software files. This may in particular be expected for the lower software image layers in software stacks because these lower layers have a higher reuse across services, and therefore a higher likelihood that multiple software items in group will be reused across several services as a consequence of which these software items will likely end-up together in a single optimized software image layer.

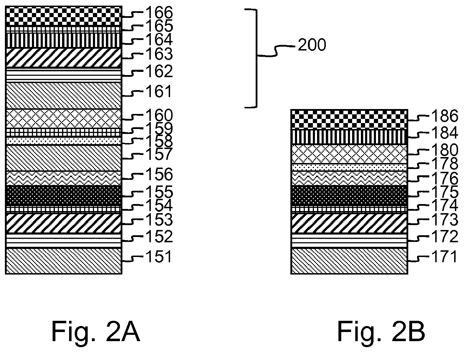

Fig. 2A graphically illustrates the total storage capacity required to store the software items 151-166 in the original software image layers 141-149 of Fig. 1. It is assumed that the surface or height of each software item in this graphical representation is representative for, e.g. linearly proportional to, the size of the respective software item, i.e. the software file or subset of software files. Fig. 2B in a similar way illustrates the total storage capacity required to store the software items 171, 172, 173, 174, 175, 176, 178, 180, 184 and 186 in the optimized software image layers L1-L10 of Fig. 1. As a consequence, 200 represents the storage footprint reduction achieved through repackaging the software items into optimized software image layers in line with the present invention.

It is important to note that the identification of common items across software image stacks as done here above by device 101 could also span multiple source image layers, and that the resulting repackaged unique optimized layers can consist of either a subset or superset of these common items. Indeed, In Fig. 1, each resulting optimized image layer represents a single file or as explained here above a common set of items within originating image layers. However, each resulting optimized software image layer could also combine multiple of these common sets of items, or the latter could also be scattered across multiple resulting optimized image layers, e.g. to be more future-proof when new software image layer stacks need to be optimized.

Moreover, it is also possible that multiple combinations and variants of the same set of common items could be generated, trading off optimality with flexibility and speed. For example, it may be interesting to create different optimized versions of a particular software image stack, depending on the set of other services and corresponding image layer stacks that service will be deployed with on a particular compute node or edge cloud.

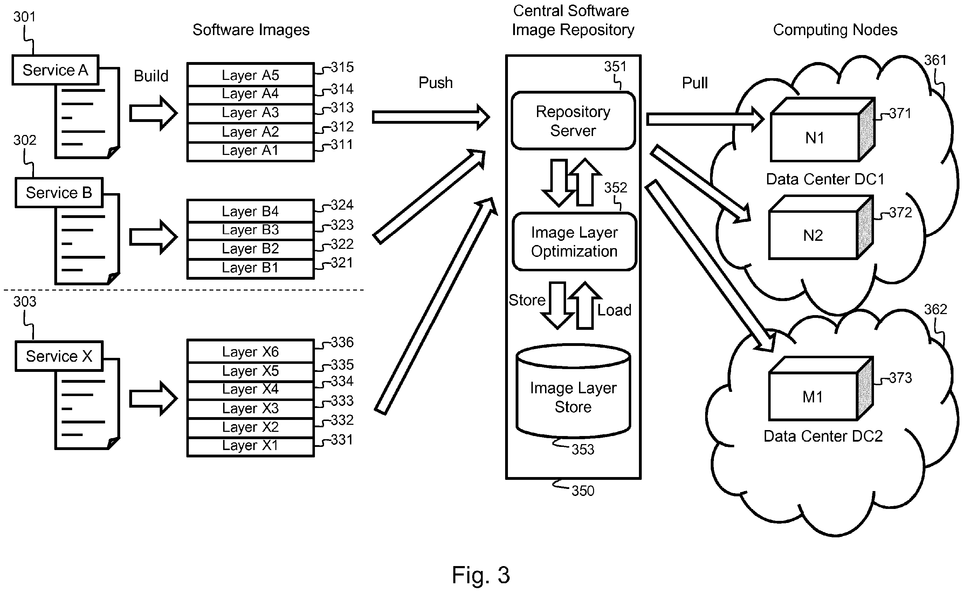

Fig. 3 illustrates service deployment via a centralized architecture with a central software image repository 350 that hosts an embodiment 352 of the device for optimising software image layers according to the present invention. Service images A, B and X, respectively denoted 301, 302 and 303 in Fig. 3, are first generated via various build scripts, resulting in software images that consist of a stack of (reusable) software image layers, each containing a subset of the necessary binaries, libraries and other artifacts required for provisioning, deploying and running that service. For service A, a software stack consisting of five software image layers A1-A5 were built, respectively denoted 311, 312, 313, 314 and 315 in Fig. 3. For service B, a software stack consisting of four software image layers B1-B4 were built, respectively denoted 321, 322, 323 and 324 in Fig. 3. For service X, a software stack consisting of six software image layers X1-X6 were built, respectively denoted 331, 332, 333, 334, 335 and 336 in Fig. 3. Different services are developed by one or more users or entities, e.g. different teams, divisions, companies, etc. and consequently have their own build scripts, resulting in different sets of software image layers. In the example of Fig. 3, the dashed line denotes that service A and service B are developed by a first entity, whereas service X is developed by a second entity. Often, some degree of software image layer reuse is present through the reuse of the same base layer(s). The top layers typically contain service-specific software items and often cannot be shared across services. These software image layers 311-315, 321-324 and 331-336 subsequently are pushed onto a central software image repository 350. Note that this could be either a public/common repository that is shared worldwide, or a private repository that is shared by a smaller group, e.g. within a company. When a service later needs to be provisioned and deployed onto one or more computing nodes, like for instance node N1 or 371 in data center DC1 or 361, node N2 or 372 in data center DC1 or 361 or node M1 or 373 in data center DC2 or 362, the software image layers that form part of the corresponding software stack are pulled from the repository 350 and installed in the computing node(s). Layers that have been pulled already onto a particular computing node don't need to be pulled again, e.g. when the service is restarted, or when the service has one or more image layers in common with an already provisioned service on that same computing node. As is shown in Fig. 3, an embodiment 352 of the device for optimizing software image layers may be installed in the central software image repository 350 in between the repository server 351 that manages the storage of software image layers pushed into the central repository 350 and the software image layer store 353 that memorizes the software image layers. The device 352 may optimize the software image layers each time a service or software image layer stack is pushed into the central repository 350, to thereby reduce the storage footprint for such new service in the image layer store 353 immediately. Doing the optimizations at the push stage brings the advantage that no optimizations are needed when a service is being pulled by a particular computing node, hence avoiding additional delays at the pull stage. Alternatively, the device 352 may optimize the software image layers each time a service or software image layer stack is pulled from the image layer store 353, or the first time a software image layer is pulled from the repository 353, or each time a significant optimization could possibly be made, e.g. one it has learned the correlation between service deployments. Doing the optimizations at the pull stage brings the advantage that correlations between services that are being pulled from the same location are better understood. This avoids blind efforts at the push stage in useless optimizations and enables location specific optimizations of software image layers.

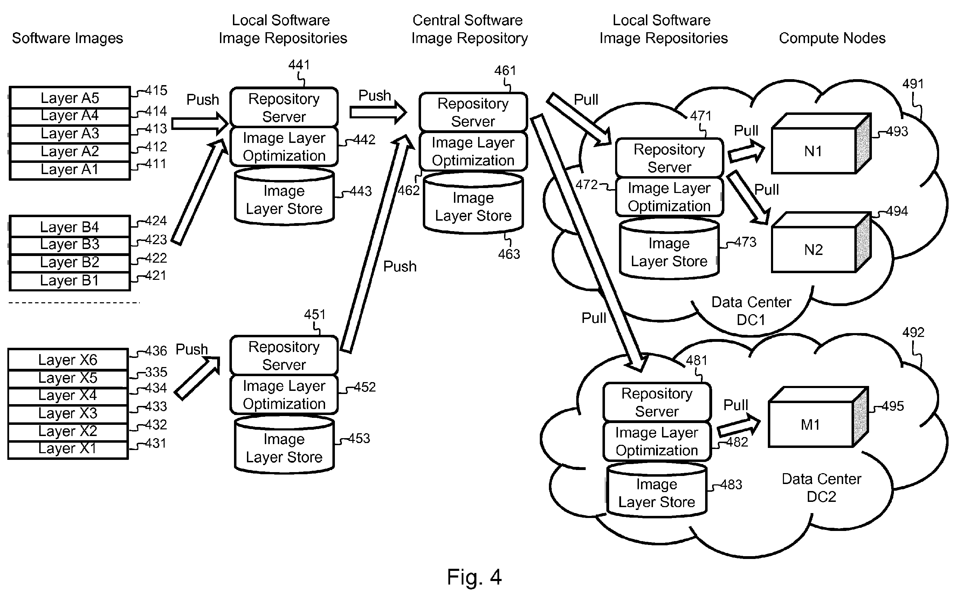

Fig. 4 illustrates service deployment via a distributed architecture with local and central software image repositories hosting embodiments 442, 452, 462, 472, 482 of the device according to the present invention. Fig. 4 shows again a first software stack consisting of five software image layers A1-A5, respectively denoted 411, 412, 413, 414 and 415, jointly representing a first software image or service A, a second software stack consisting of four software image layers B1-B4, respectively denoted 421, 422, 423 and 424, jointly representing a second software image or service B, and a third software stack consisting of six software image layers X1-X6, respectively denoted 431, 432, 433, 434, 435 and 436, jointly representing a third software image or service C. In comparison with the central architecture of Fig. 3, additional local software image repositories are added next to the central software image repository in the distributed architecture of Fig. 4. Four local software image repositories are shown in Fig. 4 each consisting of a repository server, a device for software image layer optimization according to the present invention and a software image layer store. Repository server 441, software image layer optimization device 442 and software image layer store 443 jointly form a first local software image repository handling software image layer stacks 411-415 and 421-424 pushed by a first service provider. Repository server 451, software image layer optimization device 452 and software image layer store 453 jointly form a second local software image repository handling software image layer stacks 431-436 pushed by a second service provider. Repository server 471, software image layer optimization device 472 and software image layer store 473 jointly form a third local software image repository handling software image layer stacks pulled by computing nodes N1 or 493, and N2 or 494 in a first data center DC1 or 491. Repository server 481, software image layer optimization device 482 and software image layer store 483 jointly form a fourth local software image repository handling software image layer stacks pulled by computing nodes M1 or 495 in a second data center DC2 or 492. The advantage of the distributed architecture of Fig. 4 over the centralized architecture of Fig. 3 is that it allows to do various optimizations locally when pushing new software image layer stacks from each individual service provider into the distributed repository, such that the central software image repository 461, 462, 463 no longer has to do all optimizations. Further, the distributed architecture of Fig. 4 allows to significantly reduce the amount of unique software image layers that needs to be pushed over the Internet to the central software image repository. Also in the various data centers 491, 492, edge cloud environments or the like, a local software image repository could be installed to minimize the bandwidth and download times for fetching the unique software image layers locally and re-optimizing and redistributing them locally across the various computing nodes. The local software image repositories could either be explicitly visible in the system, or could also be transparent caches such as content delivery network (CDN) nodes. A specific optimization strategy could be applied in the local software image repositories such that the central software image repository 461, 462, 463 only has to perform a small optimization effort. As an example, a strategy could be that the local software image repositories make many atomic small software image layers that easily could be aggregated in the central software image repository, either during push or pull.

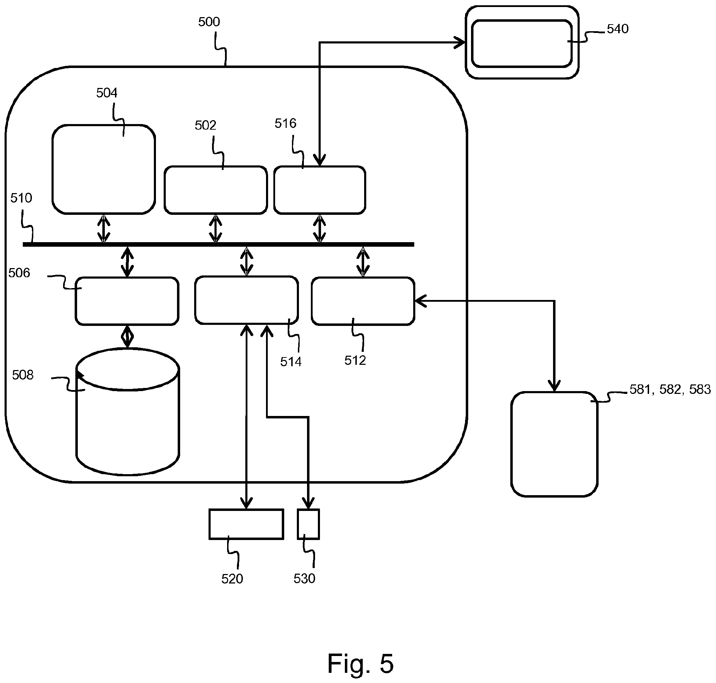

Fig. 5 shows a suitable computing system 500 according to an embodiment of the invention. Computing system 500 is suitable for implementing devices 101, 352, 442, 452, 462, 472 and 482 according to the above embodiments. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (101; 352; 442, 452, 462, 472, 482) for optimising software image layers (141-149) of plural software image layer stacks (131-133) stored in a common software image repository (110), each software image layer stack (131; 132; 133) comprising a plurality of software image layers (141-144; 145-146; 147-149), wherein a software image layer can individually be pushed into and pulled from said common software image repository (110) and can be reused across several of said software image layer stacks (131-133), and each software image layer (141; 142; 143; 144; 145; 146, 147; 148; 149) comprising one or more software items (151-152; 153; 154-155; 156; 157-158; 159-160; 161-162; 163-164; 165-166), wherein a software item is either an individual software file or a subset of software files, said device (101) comprising:
- a content analysing module (104) configured to analyse the content of said software image layers (141-149) and identify overlap in software items (151-166) between said software image layers (141-149);
- a layer optimization module (105) configured to repackage the software items (151-166) of said software image layers (141-149) into optimized software image layers (171-186) wherein said optimized software image layers (171-186) associated with said software image layer stacks (131-133) comprise a number of optimized software image layers (171, 177, 181; 172, 182; 173, 183; and 174, 179, 185) that have the exact same constitution of software items; and
- a storage management module (108) adapted to store said optimized software image layers (L1-L10) only once in an image layer store of said common software image repository (110).

2. A device (101) for optimising software image layers (141-149) according to claim 1, further comprising:
- a usage pattern module (106) configured to detect patterns in the push or pull commands of particular service providers or computing nodes indicative for combined usage of software image layers.

3. A device (101) for optimising software image layers (141-149) according to claim 1, further comprising:
- a tagging module (107) adapted to tag said optimized software image layers (171-186) as being unchanged.

4. A device (101) for optimising software image layers (141-149) according to claim 1,
wherein said content analysing module (104) and said layer optimization module (105) are controlled to analyse the content of said software image layers (141-149) and to repackage the software items (151-166) of said software image layers (141-149) into said optimized software image layers (171-186) when a software image layer stack (131-133) is pushed into said common software image repository (110).

5. A device (101) for optimising software image layers (141-149) according to claim 1,
wherein said content analysing module (104) and said layer optimization module (105) are controlled to analyse the content of said software image layers (141-149) and to repackage the software items (151-166) of said software image layers (141-149) into said optimized software image layers (171-186) when a software image layer stack (131-133) is pulled from said common software image repository (110).

6. A device (101; 352) for optimising software image layers (141-149) according to claim 1, wherein said device is integrated in a central software repository (350).

7. A device (101; 442, 452, 462, 472, 482) for optimising software image layers according to claim 1, wherein said device (101; 442, 452, 462, 472, 482) is distributed across plural local and/or a central software repositories.

8. A computer-implemented method for optimising software image layers (141-149) of plural software image layer stacks (131-133) stored in a common software image repository (110), each software image layer stack (131; 132; 133) comprising a plurality of software image layers (141-144; 145-146; 147-149), wherein a software image layer can individually be pushed into and pulled from said common software image repository (110) and can be reused across several of said software image layer stacks (131-133), and each software image layer (141; 142; 143; 144; 145; 146, 147; 148; 149) comprising one or more software items (151-152; 153; 154-155; 156; 157-158; 159-160; 161-162; 163-164; 165-166), wherein a software item is either an individual software file or a subset of software files, said method comprising:
- analysing the content of said software image layers (141-149) and identifying overlap in software items (151-166) between said software image layers (141-149); and
- repackaging the software items (151-166) of said software image layers (141-149) into optimized software image layers (171-186) wherein said optimized software image layers (171-186) associated with said software image layer stacks (131-133) comprise a number of optimized software image layers (171, 177, 181; 172, 182; 173, 183; and 174, 179, 185) that have the exact same constitution of software items; and
- storing said optimized software image layers (L1-L10) only once in an image layer store of said common software image repository (110).

9. A computer program product comprising computer-executable instructions for performing the method of claim 8 when the program is run on a computer (500).

10. A computer readable storage medium (504) comprising the computer program product according to claim 9.

## Patentansprüche

1. Vorrichtung (101; 352; 442, 452, 462, 472, 482) zur Optimierung von Software-Abbildschichten (141-149) von mehreren Software-Abbildschichten-Stapeln (131-133), die in einem gemeinsamen Software-Abbild-Repository (110) gespeichert sind, wobei jeder Software-Abbildschicht-Stapel (131; 132; 133) mehrere Software- Abbildschichten (141-144; 145-146; 147-149) umfasst, wobei eine Software-Abbildschicht einzeln in das gemeinsame Software-Abbild-Repository (110) verschoben und daraus abgerufen werden kann und über mehrere der genannten Software-Image-Layer-Stapel (131-133) und jede Software-Image-Schicht (141; 142; 143; 144; 144; 145; 146, 147; 148; 149) wiederverwendet werden kann, welche ein oder mehrere Softwareelemente (151-152; 153; 154-155; 156; 157-158; 159-160; 161-162; 163-164; 165-166) umfassen, wobei ein Softwareelement entweder eine einzelne Softwaredatei oder eine Teilmenge von Softwaredateien ist, wobei die Vorrichtung (101) umfasst:
- ein Inhaltsanalysemodul (104), das konfiguriert ist, den Inhalt dieser Software-Abbildschichten (141-149) zu analysieren und Überlappungen von Softwareelementen (151-166) zwischen diesen Software-Abbildschichten (141-149) zu identifizieren;
- ein Schichtoptimierungsmodul (105), das konfiguriert ist, die Softwareelemente (151-166) der Software-Abbildschichten (141-149) in optimierte Software-Abbildschichten (171-186) umzupacken, wobei die optimierten Software-Abbildschichten (171-186), die den Software-Abbildschichtstapeln (131-133) zugeordnet sind, eine Reihe optimierter Software-Abbildschichten (171, 177, 181; 172, 182; 173, 183; und 174, 179, 185) umfassen, die genau die gleiche Konstitution von Softwaregegenständen haben; und
- ein Speicherverwaltungsmodul (108), das angepasst ist, um die genannten optimierten Software-Abbildschichten (L 1-L 10) nur einmal in einem Software-Abbildschichtspeicher des gemeinsamen Software-Abbild-Repositorys (110) zu speichern.

2. Vorrichtung (101) zur Optimierung von Software-Abbildschichten (141-149) nach Anspruch 1, weiter umfassend:
- ein Modul für Nutzungsmuster (106), das konfiguriert ist, um Muster in den Push- oder Pull-Befehlen bestimmter Diensteanbieter oder Rechenknoten zu erkennen, die auf die kombinierte Verwendung von Software-Abbildschichten hinweisen.

3. Vorrichtung (101) zur Optimierung von Software-Abbildschichten (141-149) nach Anspruch 1, weiter umfassend:
- ein Tagging-Modul (107), das so angepasst ist, dass die optimierten Software-Abbildschichten (171-186) als unverändert gekennzeichnet werden.

4. Vorrichtung (101) zur Optimierung von Software-Abbildschichten (141-149) nach Anspruch 1, worin das Inhaltsanalysemodul (104) und das Schichtoptimierungsmodul (105) gesteuert werden, um den Inhalt der Software-Abbildschichten (141-149) zu analysieren und die Software-Elemente (151-166) der Software-Abbildschichten (141-149) in die optimierten Software-Abbildschichten (171-186) neu zu packen, wenn ein Software-Abbildschichtstapel (131-133) in das gemeinsame Software-AbbildRepository (110) verschoben wird.

5. Vorrichtung (101) zur Optimierung von Software-Bildschichten (141-149) gemäß Anspruch 1, wobei das Inhaltsanalysemodul (104) und das Schichtoptimierungsmodul (105) gesteuert werden, um den Inhalt der Software-Abbildschichten (141-149) zu analysieren und die Softwareelemente (151-166) der Software-Abbildschichten (141-149) in die optimierten Software-Abbildschichten (171-186) neu zu verpacken, wenn ein Software-Abbildschichtstapel (131-133) aus dem gemeinsamen Software-Abbild-Repository (110) herausgezogen wird.

6. Vorrichtung (101; 352) zur Optimierung von Software-Abbildschichten (141-149) nach Anspruch 1, wobei die Vorrichtung in ein zentrales Software-Repository (350) integriert ist.

7. Vorrichtung (101; 442, 452, 462, 472, 482) zur Optimierung von Software-Abbildschichten nach Anspruch 1, wobei die Vorrichtung (101; 442, 452, 462, 472, 482) über mehrere lokale Software-Repositories und/oder ein zentrales Software-Repository verteilt ist.

8. Computerimplementiertes Verfahren zur Optimierung von Software-Abbildschichten (141-149) von mehreren Software-Abbildschichtstapeln (131-133), die in einem gemeinsamen Software-Abbild-Repository (110) gespeichert sind, wobei jeder Software-Abbildschichtstapel (131; 132; 133) eine Vielzahl von Software-Abbildschichten (141-144; 145-146; 147-149) umfasst, wobei eine Software-Abbildschicht einzeln in das gemeinsame Software-Abbild-Repository (110) geschoben und daraus gezogen werden kann und über mehrere der Software-Abbildschichtstapel (131-133) hinweg wiederverwendet werden kann und jede Software-Abbildschicht (141; 142; 143; 144; 145; 146, 147; 148; 149) ein oder mehrere Software-Elemente (151-152; 153; 154-155; 156; 157-158; 159-160; 161-162; 163-164; 165-166) umfasst, wobei ein Softwareelement entweder eine einzelne Softwaredatei oder eine Teilmenge von Softwaredateien ist, wobei das Verfahren Folgendes umfasst:
- Analysieren des Inhalts der Software-Abbildschichten (141-149) und Identifizierung von Überlappungen in Software-Elementen (151-166) zwischen den Software-Abbildschichten (141-149); und
- Umpacken der Softwareelemente (151-166) der Software-Abbildschichten (141-149) in optimierte Software-Abbildschichten (171-186), wobei die optimierten Software-Abbildschichten (171-186), die mit den Software-Abbildschichtstapeln (131-133) verbunden sind, eine Anzahl von optimierten Software-Abbildschichten (171, 177, 181; 172, 182; 173, 183; und 174, 179, 185) umfassen, die genau die gleiche Konstitution von Software-Elementen aufweisen; und
- Speicherung der optimierten Software-Abbildschichten (L 1-L 10) nur einmal in einem Abbildschicht-Speicher des gemeinsamen Software-Image-Repositorys (110).

9. Computerprogrammprodukt, umfassend computerausführbare Anweisungen zur Durchführung des Verfahrens nach Anspruch 8, wenn das Programm auf einem Computer (500) ausgeführt wird.

10. Computerlesbares Speichermedium (504), umfassend das Computerprogrammprodukt nach Anspruch 9.

## Revendications

1. Un dispositif (101; 352; 442, 452, 462, 472, 482) pour optimiser les couches d'images logicielles (141-149) de plusieurs piles de couches d'images logicielles (131-133) stockées dans un référentiel commun d'images logicielles (110), chaque pile de couches d'images logicielles (131; 132; 133) comprenant une pluralité de couches d'images logicielles (141-144; 145-146; 147-149), dans laquelle
une couche d'image logicielle peut être individuellement poussée et extraite dudit référentiel commun d'images logicielles (110) et peut être réutilisée dans plusieurs de ces piles de couches d'images logicielles (131-133) et chaque couche d'image logicielle (141; 142; 143; 144; 145; 146, 147; 148; 149) comprenant un ou plusieurs éléments logiciels (151-152; 153; 154-155; 156; 157-158; 159-160; 161-162; 163-164; 165-166), dans laquelle un élément logiciel est soit un fichier logiciel individuel, soit un sous-ensemble de fichiers logiciels, ledit dispositif (101) comprenant:
- un module d'analyse de contenu (104) configuré pour analyser le contenu desdites couches d'images logicielles (141-149) et identifier les chevauchements d'éléments logiciels (151-166) entre lesdites couches d'images logicielles (141-149) ;
- un module d'optimisation de couche (105) configuré pour reconditionner les éléments logiciels (151-166) desdites couches d'images logicielles (141-149) en couches d'images logicielles optimisées (171-186) dans lequel lesdites couches d'images logicielles optimisées (171-186) associées auxdites piles de couches d'images logicielles (131-133) comprennent un certain nombre de couches d'images logicielles optimisées (171, 177, 181; 172, 182; 173, 183; et 174, 179, 185) qui ont exactement la même constitution d'éléments logiciels; et - un module de gestion du stockage (108) adapté pour stocker lesdites couches d'images logicielles optimisées (L 1-L 10) une seule fois dans un magasin de couches d'images dudit référentiel commun d'images logicielles (110).

2. Dispositif (101) d'optimisation des couches d'images logicielles (141-149) selon la revendication 1, comprenant en outre:
- un module de modèles d'utilisation (106) configuré pour détecter des modèles dans les commandes push ou pull de fournisseurs de services particuliers ou de noeuds de calcul indicatifs de l'utilisation combinée de couches d'images logicielles.

3. Dispositif (101) d'optimisation des couches d'images logicielles (141-149) selon la revendication 1, comprenant en outre : - un module de marquage (107) adapté pour marquer lesdites couches d'images logicielles optimisées (171-186) comme étant inchangées.

4. Un dispositif (101) d'optimisation des couches d'images logicielles (141-149) selon la revendication 1,
dans laquelle ledit module d'analyse de contenu (104) et ledit module d'optimisation de couche (105) sont contrôlés pour analyser le contenu desdites couches d'images logicielles (141-149) et pour reconditionner les éléments logiciels (151-166) desdites couches d'images logicielles (141-149) dans lesdites couches d'images logicielles optimisées (171-186) lorsqu'une pile de couches d'images logicielles (131-133) est poussée dans ledit référentiel commun d'images logicielles (110).

5. Dispositif (101) d'optimisation des couches d'images logicielles (141-149) selon la revendication 1, dans lequel ledit module d'analyse de contenu (104) et ledit module d'optimisation de couche (105) sont contrôlés pour analyser le contenu desdites couches d'images logicielles (141-149) et pour reconditionner les éléments logiciels (151-166) desdites couches d'images logicielles (141-149) dans lesdites couches d'images logicielles optimisées (171-186) lorsqu'une pile de couches d'images logicielles (131-133) est extraite dudit référentiel commun d'images logicielles (110).

6. Dispositif (101; 352) permettant d'optimiser les couches d'images logicielles (141-149) selon la revendication 1, dans lequel ledit dispositif est intégré dans un référentiel logiciel central (350).

7. Dispositif (101 ; 442, 452, 462, 472, 482) permettant d'optimiser les couches d'images logicielles selon la revendication 1, dans lequel ledit dispositif (101 ; 442, 452, 462, 472, 482) est réparti sur plusieurs référentiels logiciels locaux et/ou centraux.

8. Méthode mise en oeuvre par ordinateur pour optimiser les couches d'images logicielles (141-149) de plusieurs piles de couches d'images logicielles (131-133) stockées dans un référentiel commun d'images logicielles (110), chaque pile de couches d'images logicielles (131; 132; 133) comprenant une pluralité de couches d'images logicielles (141-144; 145-146; 147-149), dans laquelle une couche d'image logicielle peut être individuellement poussée et extraite dudit référentiel commun d'images logicielles (110) et peut être réutilisée dans plusieurs desdites piles de couches d'images logicielles (131-133), et chaque couche d'image logicielle (141; 142; 143; 144; 145; 146, 147; 148; 149) comprenant un ou plusieurs éléments logiciels (151-152; 153; 154-155; 156; 157-158; 159-160; 161-162; 163-164; 165-166), dans laquelle un élément logiciel est soit un fichier logiciel individuel, soit un sous-ensemble de fichiers logiciels, ladite méthode comprenant:
- analyser le contenu desdites couches d'images logicielles (141-149) et identifier les chevauchements dans les éléments logiciels (151-166) entre lesdites couches d'images logicielles (141-149); et
- reconditionner les éléments logiciels (151-166) desdites couches d'images logicielles (141-149) en couches d'images logicielles optimisées (171-186) dans lesquelles lesdites couches d'images logicielles optimisées (171-186) associées auxdites piles de couches d'images logicielles (131-133) comprennent un certain nombre de couches d'images logicielles optimisées (171, 177, 181; 172, 182; 173, 183; et 17 4, 179, 185) qui ont exactement la même constitution d'éléments logiciels; et
- stocker lesdites couches d'images logicielles optimisées (L 1-L 10) une seule fois dans un magasin de couches d'images dudit référentiel commun d'images logicielles (110).

9. Produit de programme d'ordinateur comprenant des instructions exécutables par ordinateur pour exécuter le procédé selon la revendication 8 lorsque le programme est exécuté sur un ordinateur (500).

10. Support de stockage lisible par ordinateur (504) comprenant le produit de programme d'ordinateur selon la revendication 9.
